# FASCICULE DE BREVET EUROPEEN

(11) **EP 1 371 742 B1**
(45) Date de publication et mention de la délivrance du brevet: **17.08.2011**
(21) Numéro de dépôt: 03291396.4
(22) Date de dépôt: 12.06.2003
(51) Int. Cl.: C22C 33/02, F16N 15/00

(54) **Matériau dense autolubrifiant à sec; pièce mécanique en ledit matériau; procédé d'élaboration dudit matériau**
Trockenes und selbstschmierendes Material, mechanische Teile in solchem Material und Verfahren zur Herstellung
Dry and self lubricant material,mechanical pieces made of a such material and its method of fabrication

(30) Priorité: 14.06.2002 FR 0207336
(43) Date de publication de la demande: 17.12.2003
(73) Titulaire: SNECMA, 75015 Paris (FR)
(72) Inventeur: Braillard, Frédéric, 86100 Chatellerault (FR); Perruchaut, Philippe, 94140 Alfortville (FR); Vigneau, Joel, 91750 Champcueil (FR); Mons, Claude, 77176 Savigny-le-Temple (FR); Ribot, Didier, 86220 Dange Saint-Romain (FR)
(74) Mandataire: Le Roux, Martine

(56) Documents cités:
- GB-A- 2 284 430
- US-A- 4 891 080
- US-A- 5 997 805
- US-A- 6 126 894
- US-A- 6 143 240

## Description

La présente invention a pour objet :
- un nouveau matériau, dense, autolubrifiant à sec, qui présente une résistance mécanique intéressante dans le domaine des températures moyennes à élevées ;
- les pièces mécaniques en ledit matériau ;
- un procédé d'élaboration dudit matériau.

Ledit nouveau métariau a été développé en référence à un cahier des charges spécifique précisé ci-dessous.

La demande de brevet GB 2 284 430 décrit un matériau dur, autolubrifiant à sec dans sa masse, constitué d'une matrice dure (à base d'un carbure, nitrure, borure, d'une céramique...) renfermant dans son volume des particules de lubrifiant solide.

De nombreuses fonctions des turbomachines doivent être assurées par des produits de frottement à bas coefficient de frottement, dans des zones où la lubrification conventionnelle (qui combine porosité du matériau en cause et emploi d'huile et/ou graisse) est impossible. Une bonne part de ces fonctions est à assurer par de petites pièces mécaniques de formes plus ou moins complexes (telles les douilles dans lesquelles tournent les pivots d'aubes à calage variable), soumises à de forts niveaux de température et de contrainte.

Les domaines de températures dites basses (moins de 300°C) font appel à des matériaux organiques et ceux de températures dites hautes (plus de 600°C) à des matériaux métalliques, principalement des bases cobalt (si les bas coefficients de dilatation sont secondaires) ou à des céramiques. Les domaines intermédiaires, de températures moyennes à élevées, ne sont approchés que par des carbones, dont la fragilité limite très fortement l'emploi.

L'invention, présentement en cause, a été développée dans un tel contexte, pour proposer de petites pièces mécaniques, autolubrifiantes dans leur masse, à hautes caractéristiques mécaniques et bas coefficient de dilatation thermique, capables de fonctionner à sec, dans un domaine de températures moyennes à élevées (300°C ≤ θ ≤ 600°C). Lesdites pièces mécaniques sont dites petites dans la mesure où leurs trois dimensions restent de l'ordre du centimètre, de quelques centimètres tout au plus. A la considération de cette précision, l'homme du métier comprend que l'invention comble une lacune de la technologie existante à ce jour, technologie qui propose des procédés pour préparer des pièces mécaniques équivalentes mais respectivement de plus petite ou de plus grande taille.

Lesdites pièces mécaniques (second objet de l'invention présentement revendiquée), de par le matériau les constituant (ledit matériau constituant lui, le premier objet de l'invention présentement revendiquée), présentent un compromis très intéressant de bonne tenue mécanique à chaud et d'un faible coefficient de frottement, qui peut être maintenu dans le temps (dans la mesure où la couche de surface autolubrifiante est renouvelée en cours de fonctionnement, dans la mesure où le matériau est autolubrifiant dans sa masse). La surface desdites pièces comporte suffisamment d'éléments lubrifiants et la proportion desdits éléments lubrifiants est avantageusement homogène dans le volume desdites pièces.

Le matériau original en cause, les semi-produits et produits (pièces mécaniques, ci-dessus) en ledit matériau sont avantageusement obtenus par des techniques de métallurgie des poudres. Leur procédé d'obtention, mis en oeuvre par les inventeurs, constitue le dernier objet de l'invention présentement revendiquée.

Le nouveau matériau de l'invention, selon la revendication 1 annexée, est un matériau :
- dense : sa densité est supérieure ou égale à 90 % ; c'est-à-dire, en d'autres termes, sa porosité résiduelle est au maximum de 10 % ;
- autolubrifiant à sec dans sa masse : il présente un coefficient de frottement inférieur à 0,3 ;
- qui présente, dans le domaine des températures moyennes à élevées : de 300 à 600°C, une bonne résistance mécanique : Rm ≥ 400 MPa (ladite résistance mécanique étant définie de façon classique, familière à l'homme de l'art, comme la limite de rupture statique) ;
- constitué d'une matrice, apte à lui conférer la bonne résistance mécanique indiquée ci-dessus, dans le volume de laquelle on trouve des particules de lubrifiant solide, aptes à conférer audit matériau ses propriétés lubrifiantes à sec. Lesdites particules sont, selon une variante avantageuse, uniformément réparties dans ledit volume.

La porosité résiduelle du matériau, qui résulte de son procédé d'élaboration (voir plus loin) est faible (≤ 10 %), voire quasi nulle, dans la mesure où l'on vise, pour ledit matériau, une bonne résistance mécanique et où aucun effet réservoir d'huile ou de graisse n'est recherché.

Ledit matériau a un coefficient de dilatation thermique bas, généralement inférieur à 12.10⁻⁶, compatible avec son utilisation dans le domaine intermédiaire de température (300°C ≤ θ ≤ 600°C).

Le lubrifiant solide intervenant (il n'est pas exclu du cadre de l'invention de faire intervenir au moins deux types de lubrifiant solide) est évidemment stable aux températures d'élaboration et d'utilisation du matériau. Il doit rester intègre, apte à exercer son action lubrifiante et notamment ne pas réagir avec la matrice au sein de laquelle il intervient. Il consiste avantageusement en du nitrure de bore ou du graphite.

Il doit par ailleurs intervenir sous une forme compatible avec le procédé d'élaboration du matériau. Il peut ainsi intervenir pré-conditionné, pré-aggloméré, pré-allié...

Au sein du matériau de l'invention, les particules de lubrifiant solide ont un diamètre équivalent (il peut s'agir de particules sphériques ou anguleuses) compris entre 5 et 100 µm.

Lesdites particules de lubrifiant solide interviennent avantageusement isolées.

Il ne saurait toutefois être exclu d'en trouver, regroupées, en petites colonies. Lesdites colonies doivent bien évidemment rester petites, pour respecter l'homogénéité du matériau. De telles petites colonies sont susceptibles de présenter un diamètre équivalent d'au plus 200 µm. L'homme du métier comprend aisément l'intérêt qu'il y a à optimiser la mise oeuvre du procédé d'élaboration du matériau de l'invention, pour minimiser, éviter la formation de ces colonies ou agglomérats.

Les particules de lubrifiant solide interviennent à un taux compris entre 1 et 30 % en volume du matériau en cause. Elles interviennent bien évidemment en une quantité nécessaire (≥ 1 % en volume) à l'obtention de l'effet escompté (pour conférer des propriétés autolubrifiantes au matériau) mais aussi en une quantité raisonnable (≤ 30 %) pour ne pas affecter de façon drastique les propriétés mécaniques du matériau. On a parlé de l'obtention d'un compromis : tenue mécanique à chaud/faible coefficient de frottement.

Lesdites particules de lubrifiant solide interviennent avantageusement à un taux compris entre 10 et 20 % en volume.

La matrice du matériau de l'invention consiste en un acier ou un super-alliage métallique, plus particulièrement en :
- un acier inoxydable martensitique (par exemple de type Z5CNU17 ou 17-4PH),
- un alliage à base de cobalt (par exemple de type KC20WN ou KC25NW, HS25, HS31),
- du nickel (Ni) ou un alliage à base de nickel (par exemple de type NiCr, NK17CDAT (Astroloy)).

Ladite matrice, comme déjà indiqué, garantit les propriétés de résistance mécanique du matériau.

Le matériau de l'invention consiste plus précisément :
- en un acier inoxydable martensitique (par exemple, des types précisés ci-dessus) renfermant des particules de nitrure de bore ;
- en un alliage à base de cobalt (par exemple des types précisés ci-dessus) renfermant des particules de nitrure de bore et/ou de graphite (on a vu ci-dessus que l'intervention de plusieurs types de lubrifiant solide au sein d'une même matrice n'est pas exclue) ;
- en du nickel ou un alliage à base de nickel (par exemple, des types précisés ci-dessus) renfermant des particules de graphite.

Le matériau de l'invention est susceptible d'être obtenu par des techniques de métallurgie des poudres. On précise ci-après un procédé d'élaboration dudit matériau qui repose sur de telles techniques.

Selon son deuxième objet, la présente invention concerne des pièces métalliques, de forme plus ou moins complexe, en ledit nouveau matériau de l'invention. Il est en effet possible (voir plus loin) d'obtenir, avec ledit matériau, des pièces de forme complexe.

Les pièces mécaniques de l'invention peuvent notamment consister en des douilles, des rotules, des pivots... Elles peuvent notamment plus précisément consister en des douilles, aptes, à recevoir des pivots d'aubes à calage variable, à fonctionner dans un compresseur haute pression (en atmosphère sèche, à température élevée, d'environ 400°C).

On en vient maintenant au troisième objet de la présente invention, à un procédé d'élaboration du nouveau matériau dense, autolubrifiant dans sa masse, qui présente une bonne résistance mécanique entre 300 et 600°C.

Ledit procédé peut être du type moulage par injection de matières métalliques pulvérulentes ("Metal Injection Moulding" dit MIM). En tout état de cause, les matières premières, constitutives de la matrice et des particules de lubrifiant solide, interviennent à l'état de poudres, en mélange avec un liant organique.

Ledit procédé comprend :
- la réalisation d'un mélange intime : d'une poudre, précurseur de la matrice, de particules de lubrifiant, et d'un liant organique ;
- le moulage dudit mélange intime par pressage ou injection dans un moule ;
- l'extraction de l'ébauche moulée dudit moule ;
- le déliantage de ladite ébauche ;
- la densification par frittage de ladite ébauche déliantée.

Les poudres intervenantes peuvent avoir des morphologies sphériques ou anguleuses, suivant leur mode d'élaboration, de telle sorte qu'elles facilitent la rétention de forme et la densification, lors des étapes ultérieures du procédé. Il peut s'agir de poudres pré-alliées ou non... Ainsi, lorsque le graphite intervient à titre de lubrifiant, il est obligatoirement pré-aggloméré de façon à bien se mélanger à la poudre précurseur de la matrice et au liant.

La poudre intervenant est précurseur de la matrice, elle garantit les propriétés de résistance mécanique de l'ensemble. Ses grains présentent un diamètre équivalent compris entre 20 et 70 µm. Il s'agit avantageusement, comme indiqué précédemment, de grains d'acier, de nickel ou d'un super-alliage à base de nickel ou de cobalt.

Les particules de lubrifiant solide apportent les propriétés lubrifiantes. Elles interviennent au taux indiqué en amont (1 à 30 % en volume du volume total : poudre + particules). Lesdites particules comprennent des grains de nitrure de bore et/ou des grains de graphite enrobés de métal. Elles comprennent des grains de nitrure de bore, dont le diamètre équivalent est compris entre 5 et 30 µm et/ou des grains de graphite enrobés dont le diamètre équivalent est compris entre 30 et 90 µm. L'enrobage intervenant est évidemment compatible avec la matrice au sein de laquelle on vise à incorporer les grains de lubrifiant, solide.

Le liant organique intervenant est classique, par exemple du type cire + polymère (polypropylène, notamment).

Le mélange intime des poudre, particules et liant est avantageusement élaboré de la manière suivante :
- mélange desdites poudre et particules (préalablement mélangées entre elles, à froid) et dudit liant à une température comprise entre 150 et 200°C. A cette température, ledit liant doit présenter une viscosité adéquate ;
- refroidissement dudit mélange jusqu'à solidification ;
- broyage dudit mélange solidifié.

Le mélange intime réalisé - avantageusement obtenu sous forme de broyat - est alors moulé à la forme désirée. On peut mettre en oeuvre un pressage ou une injection dans un moule adéquat, qui reproduit la forme désirée à une échelle supérieure à 1 (pour compenser le retrait lors des étapes ultérieures de densification). Ledit moule comporte avantageusement une double enveloppe, qui permet de chauffer ou de refroidir le mélange moulé, ce afin de simplifier le remplissage dudit moule, la prise en consistance du liant et/ou le démoulage. Cette étape de moulage permet d'obtenir la géométrie de pièce souhaitée. En fait, on peut viser l'obtention directe d'une telle pièce ("produit fini"), l'obtention d'un demi-produit (à usiner par la suite) ou celle d'un brut de matériau...

L'opération de moulage est avantageusement mise en oeuvre par injection (notamment par "métal injection molding"), par exemple dans les conditions ci-après : à une température comprise entre 150 et 200°C, pendant 15 à 60 s.

Cette opération de moulage est classiquement suivie des opérations de démoulage et de déliantage.

Le déliantage est évidemment adapté à la nature du liant en cause. Il est avantageusement mis en oeuvre en deux étapes. Selon cette variante avantageuse, il comprend successivement :
- un premier traitement par voie chimique, qui vise à extraire le liant de l'ébauche obtenue par démoulage, à créer en son sein un réseau de microcanaux... Un tel premier traitement par voie chimique peut faire intervenir l'hexane (solvant du liant) en phase liquide, puis en phase vapeur;
- un second traitement par voie thermique, qui complète et finalise le déliantage amorcé par voie chimique. Ledit second traitement par voie thermique est généralement mis en oeuvre entre 110 et 450°C (avec avantageusement une vitesse de montée en température lente) sous protection gazeuse adéquate (en atmosphère réductrice : hydrogène, par exemple). Ledit second traitement par voie thermique, qui finalise le déliantage, est avantageusement poursuivi pour préfritter l'ébauche. Les températures de préfrittage sont généralement comprises entre 500 et 1 200°C. En mettant en oeuvre un tel préfrittage, on confère à l'ébauche une ossature. Le traitement thermique peut ainsi comporter plusieurs cycles, durer de 10 à 50 heures. En tout état de cause, il est adapté à la nature du matériau en cause et à l'épaisseur de l'ébauche.

La dernière étape consiste à densifier complètement ou partiellement l'ébauche déliantée. On a vu que le matériau final peut en effet présenter une porosité résiduelle jusqu'à 10 %. Le cycle de frittage est adapté au matériau en cause et est contrôlé par des vitesses de montée et de descente en température, des temps de palier et une température seuil. La gamme de température de frittage s'étend généralement de 1 100 à 1 500°C, plus fréquemment de 1 100 à 1 350°C. Ledit frittage est mis en oeuvre sous vide ou sous faible pression partielle d'un gaz protecteur adéquat (argon ou hydrogène, par exemple).

Le procédé décrit ci-dessus peut tout à fait s'analyser comme un procédé par analogie. De façon tout à fait surprenante, il a permis d'obtenir un nouveau matériau très performant qui allie densité conséquente et caractère autolubrifiant, dans une gamme de température intéressante.

Ledit procédé peut être complété, comme déjà indiqué, par une étape d'usinage de la structure dense, autolubrifiante obtenue. Il peut également être complété par au moins un traitement thermique supplémentaire destiné à durcir ladite structure. Lesdits usinage et traitement thermique supplémentaires peuvent être cumulés.

On se propose maintenant d'illustrer, de façon nullement limitative, les différents aspects de l'invention (produit, procédé) par :
- la figure annexée ;
- l'exemple ci-après.

Ladite figure est un cliché d'une coupe d'un matériau de l'invention référencé 1 (l'échelle est indiquée sur le cliché ). On y voit, au sein de la matrice, référencée 2, (acier inoxydable martensitique), la répartition homogène des particules de lubrifiant solide, référencées 3 (BN). Ledit matériau a été obtenu comme précisé dans l'exemple ci-après.

### Exemple

Dans une première étape, on a mélangé intimement deux poudres métalliques :
- une poudre d'acier Z5CNU17, intervenant à raison de 85 % en volume, présentant une granulométrie moyenne d'environ 50 µm ;
- des particules de nitrure de bore, intervenant à raison de 15 % en volume, présentant une granulométrie moyenne d'environ 30 µm.

On a ensuite ajouté audit mélange intime un liant organique constitué de cire et de polypropylène. Le liant intervient à raison de 30 % en volume (pour 70 % en volume du mélange de poudres). On génère un second mélange intime. Il est chauffé à 180°C de façon à acquérir un état pâteux et à être parfaitement homogène.

Il est ensuite refroidi, découpé puis finalement broyé pour générer un granulat.

Le granulat obtenu est introduit dans la machine à injecter et chauffé à 180°C.

Le mélange ainsi chauffé est alors injecté dans la cavité d'un moule métallique présentant une forme adéquate.

Après 1 min, ledit moule est ouvert et la pièce moulée est extraite.

Le déliantage est mis en oeuvre en deux étapes. On fait agir chimiquement de l'hexane, dans une première étape, jusqu'à élimination quasi complète de la cire. Dans une seconde étape, on pyrolyse le polypropylène dans une atmosphère d'hydrogène. La température est montée lentement puis maintenue à 400°C pendant 2 heures.

Après ce palier à 400°C, ladite température est montée lentement jusqu'à 900°C. Elle est maintenue à cette valeur pendant 10 minutes pour préfritter la pièce démoulée. Ce cycle de préfrittage dure en fait 32 heures.

Ladite pièce préfrittée est refroidie puis retraitée thermiquement : à 1200°C, pendant 2 h, pour frittage (densification).

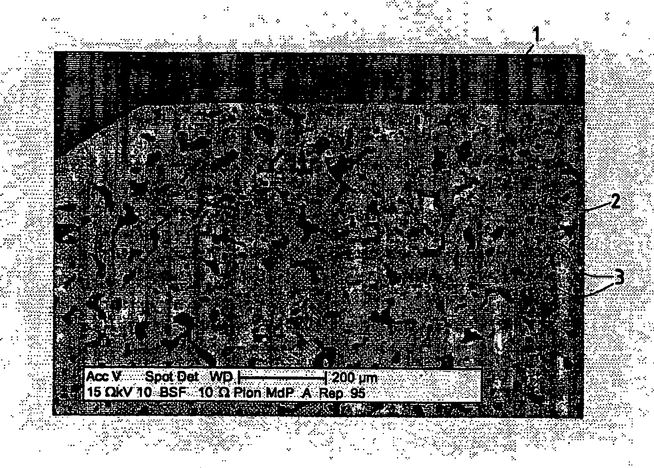

Sur la figure 1, on voit nettement en noir les particules de nitrure de bore dispersées dans la matrice en acier (plus claire). Lesdites particules présentent un diamètre équivalent de 20 à 100 µm. Il est évident que les particules initiales de 20 µm de diamètre se sont parfois regroupées pour former de petites colonies.

## Revendications

1. Matériau autolubrifiant à sec dans sa masse, constitué d'une matrice renfermant, dans son volume, des particules de lubrifiant solide, **caractérisé en ce qu'**il consiste en :
- un acier inoxydable martensitique renfermant, à titre de particules de lubrifiant solide, des particules de nitrure de bore ; ou
- un alliage à base de cobalt renfermant, à titre de particules de lubrifiant solide, des particules de nitrure de bore et/ou de graphite ; ou
- du nickel ou un alliage à base de nickel renfermant, à titre de particules de lubrifiant solide, des particules de graphite ;
lesdites particules de lubrifiant solide ayant un diamètre équivalent compris entre 5 et 100 µm, et intervenant à raison de 1 à 30 % en volume, avantageusement à raison de 10 à 20 % en volume ; et
ledit matériau présentant une densité ≥ 90 %, un coefficient de frottement < 0,3 , une résistance mécanique Rₘ ≥ 400 MPa, dans un domaine de températures moyennes à élevées : 300°C ≤ θ ≤ 600°C .

2. Matériau selon la revendication 1, **caractérisé en ce qu'**il consiste en :
- un alliage à base de cobalt renfermant des particules de nitrure de bore et/ou de graphite.

3. Matériau selon la revendication 1 ou 2, susceptible d'être obtenu par des techniques de métallurgie des poudres.

4. Pièce mécanique, consistant notamment en une douille, une rotule, un pivot, **caractérisée en ce qu'**elle est réalisée en un matériau selon l'une quelconque des revendications 1 à 3.

5. Procédé d'élaboration d'un matériau selon l'une quelconque des revendications 1 à 3, **caractérisé en ce qu'**il comprend :
- la réalisation d'un mélange intime d'une poudre, précurseur de la matrice, de particules de lubrifiant, et d'un liant organique ; ladite poudre, précurseur de la matrice, étant constituée de grains dont le diamètre équivalent est compris entre 20 et 70 µm ; lesdites particules de lubrifiant, comprenant des grains de nitrure de bore, dont le diamètre équivalent est compris entre 5 et 30 µm et/ou lesdites particules de lubrifiant, comprenant des grains de graphite enrobés de métal, dont le diamètre équivalent est compris entre 30 et 90 µm ;
- le moulage dudit mélange intime par pressage ou injection dans un moule ;
- l'extraction de l'ébauche moulée dudit moule;
- le déliantage de ladite ébauche ;
- la densification par frittage de ladite ébauche déliantée.

6. Procédé selon la revendication 5, **caractérisé en ce que** ledit mélange intime de la poudre, des particules et du liant est obtenu en trois étapes :
- mélange desdites poudre, particules et dudit liant à une température comprise entre 150 et 200°C ;
- refroidissement dudit mélange jusqu'à solidification ;
- broyage dudit mélange solidifié.

7. Procédé selon la revendication 5 ou 6, **caractérisé en ce que** ledit moulage est mis en oeuvre par injection, avantageusement à une température comprise entre 150 et 200°C, pendant 15 à 60 s.

8. Procédé selon l'une quelconque des revendications 5 à 7, **caractérisé en ce que** ledit déliantage comprend un premier traitement par voie chimique suivi d'un second traitement par voie thermique, ledit second traitement par voie thermique étant avantageusement poursuivi pour préfritter ladite ébauche.

9. Procédé selon la revendication 8, **caractérisé en ce que** ledit déliantage comprend un premier traitement par voie chimique qui fait intervenir l'hexane en phase liquide puis en phase vapeur.

10. Procédé selon la revendication 9, **caractérisé en ce que** ledit déliantage comprend un second traitement par voie thermique mis en oeuvre, sous protection gazeuse adéquate, entre 110 et 450°C.

11. Procédé selon l'une quelconque des revendications 5 à 10, **caractérisé en ce que** la densification par frittage est mise en oeuvre sous vide ou sous faible pression partielle d'un gaz protecteur adéquat, entre 1100 et 1500°C.

12. Procédé selon l'une quelconque des revendications 5 à 11, **caractérisé en ce qu'**il comprend en outre :
- l'usinage de ladite ébauche déliantée densifiée .

13. Procédé selon l'une quelconque des revendications 5 à 12, **caractérisé en ce qu'**il comprend en outre :
- au moins un traitement thermique supplémentaire destiné à durcir ladite ébauche déliantée densifiée, éventuellement usinée.

## Claims

1. A bulk dry self-lubricating material, constituted by a matrix that includes particles of solid lubricant in its volume, the material being **characterized in that** it consists of:
- a martensitic stainless steel containing particles of boron nitride as particles of solid lubricant; or
- a cobalt-based alloy containing particles of boron nitride and/or graphite as particles of solid lubricant; or
- nickel or a nickel-based alloy containing particles of graphite as particles of solid lubricant;
said solid lubricant particles having an equivalent diameter in the range 5 µm to 100 µm and being present in an amount of 1% to 30% by volume, advantageously in an amount of 10% to 20% by volume; and said material having a density of ≥ 90%, a coefficient of friction of < 0.3, and an Rₘ strength of ≥ 400 MPa in a medium to high temperature range of 300°C ≤ θ ≤ 600°C.

2. The material according to claim 1, **characterized in that** it consists of:
- a cobalt-based alloy containing particles of boron nitride and/or graphite.

3. The material according to claim 1 or claim 2, able to be obtained by powder metallurgy techniques.

4. A mechanical part, consisting in particular of a bushing, a pivot, and a spindle, **characterized in that** it is formed from a material according to any one of claims 1 to 3.

5. A method of manufacturing a material according any one of claims 1 to 3, **characterized in that** it comprises:
- forming an intimate mixture of a powder which is the matrix precursor, particles of lubricant and an organic binder; said powder, the matrix precursor, being constituted by grains with an equivalent diameter in the range 20 µm to 70 µm; said particles of lubricant comprising grains of boron nitride with an equivalent diameter in the range 5 µm to 30 µm and/or said particles of lubricant comprising grains of metal-coated graphite with an equivalent diameter in the range 30 µm to 90 µm;
- molding said intimate mixture by pressing or injecting into a mold;
- removing the molded blank from said mold;
- debinding said blank; and
- densifying said debound blank by sintering.

6. The method according to claim 5, **characterized in that** said intimate mixture of powder, particles and binder is obtained in three steps:
- mixing said powder, particles and said binder at a temperature in the range 150°C to 200°C;
- cooling said mixture until it solidifies; and
- grinding said solidified mixture.

7. The method according to claim 5 or claim 6, **characterized in that** said molding is implemented by injection, advantageously at a temperature in the range 150°C to 200°C, for 15 to 60 seconds.

8. The method according to any one of claims 5 to 7, **characterized in that** said debinding comprises a first chemical treatment followed by a second heat treatment, said second heat treatment advantageously being continued to pre-sinter said blank.

9. The method according to claim 8, **characterized in that** said debinding includes a first chemical treatment using hexane in the liquid phase then in the vapor phase.

10. The method according to claim 9, **characterized in that** said debinding includes a second heat treatment carried out in a suitable protective gas, between 110°C and 450°C.

11. The method according to any one of claims 5 to 10, **characterized in that** densification by sintering is carried out in a vacuum or in a low partial pressure of a suitable protective gas, between 1100°C and 1500°C.

12. The method according to any one of claims 5 to 11, **characterized in that** it further comprises
- machining said densified debound blank.

13. The method according to any one of claims 5 to 12, **characterized in that** it further comprises:
- at least one supplemental heat treatment intended to harden said densified debound and optionally machined blank.

## Patentansprüche

1. Werkstoff, der in seiner Masse trockenlaufend selbstschmierend ist, bestehend aus einer Matrix, in deren Volumen Festschmierstoffpartikel eingeschlossen sind, **dadurch gekennzeichnet, daß** er besteht aus:
- einem martensitischen rostfreien Stahl, der als Festschmierstoffpartikel Partikel aus Bornitrid enthält, oder
- einer cobaltbasierten Legierung, die als Festschmierstoffpartikel Partikel aus Bornitrid und/oder aus Graphit enthält, oder
- Nickel oder einer nickelbasierten Legierung, die als Festschmierstoffpartikel Partikel aus Graphit enthält,
wobei die Festschmierstoffpartikel einen Äquivalentdurchmesser zwischen 5 und 100 µm aufweisen und in einer Menge von 1 bis 30 Vol.-%, vorteilhafterweise in einer Menge von 10 bis 20 Vol.-% eingesetzt werden, und
wobei der Werkstoff eine Dichte ≥ 90%, einen Reibungskoeffizienten < 0,3, eine mechanische Festigkeit Rₘ ≥ 400 MPa, in einem Bereich von mittleren bis hohen Temperaturen von 300 °C ≤ θ ≤ 600 °C aufweist.

2. Werkstoff nach Anspruch 1, **dadurch gekennzeichnet, daß** er besteht aus:
- einer cobaltbasierten Legierung, die Partikel aus Bornitrid und/oder aus Graphit enthält.

3. Werkstoff nach Anspruch 1 oder 2, der geeignet ist, mittels Techniken der Pulvermetallurgie erhalten zu werden.

4. Mechanisches Teil, das insbesondere aus einer Buchse, einem Kugelgelenk, einem Drehzapfen besteht, **dadurch gekennzeichnet, daß** es aus einem Werkstoff nach einem der Ansprüche 1 bis 3 gefertigt ist.

5. Verfahren zur Herstellung eines Werkstoffs nach einem der Ansprüche 1 bis 3, **dadurch gekennzeichnet, daß** es umfaßt:
- die Zubereitung einer innigen Mischung aus einem Pulver, Vorläufer der Matrix, Schmierstoffpartikeln und einem organischen Bindemittel, wobei das Pulver, Vorläufer der Matrix, aus Körnern besteht, deren Äquivalentdurchmesser zwischen 20 und 70 µm liegt, wobei die Schmierstoffpartikel Bornitridkörner umfassen, deren Äquivalentdurchmesser zwischen 5 und 30 µm liegt und/oder die Schmierstoffpartikel metallummantelte Graphitkörner umfassen, deren Äquivalentdurchmesser zwischen 30 und 90 µm liegt,
- das Formen der innigen Mischung durch Pressen oder Spritzen in eine Form,
- das Ausformen des geformten Rohlings aus der Form,
- das Entbindern des Rohlings,
- das Verdichten des entbinderten Rohlings durch Sintern.

6. Verfahren nach Anspruch 5, **dadurch gekennzeichnet, daß** die innige Mischung aus dem Pulver, den Partikeln und dem Bindemittel in drei Schritten erhalten wird:
- Mischen des Pulvers, der Partikel und des Bindemittels bei einer Temperatur zwischen 150 und 200 °C,
- Abkühlen der Mischung bis zur Verfestigung,
- Mahlen der verfestigten Mischung.

7. Verfahren nach Anspruch 5 oder 6, **dadurch gekennzeichnet, daß** das Formen durch Spritzen, vorteilhafterweise bei einer Temperatur zwischen 150 und 200 °C, für 15 bis 60 Sek. durchgeführt wird.

8. Verfahren nach einem der Ansprüche 5 bis 7, **dadurch gekennzeichnet, daß** die Entbinderung eine erste Behandlung auf chemischem Weg umfaßt, an die sich eine zweite Behandlung auf thermischem Weg anschließt, wobei die zweite Behandlung auf thermischem Weg vorteilhafterweise fortgesetzt wird, um den Rohling vorzusintern.

9. Verfahren nach Anspruch 8, **dadurch gekennzeichnet, daß** die Entbinderung eine erste Behandlung auf chemischem Weg umfaßt, bei der Hexan in flüssiger Phase, dann in Gasphase zum Einsatz kommt.

10. Verfahren nach Anspruch 9, **dadurch gekennzeichnet, daß** die Entbinderung eine zweite Behandlung auf thermischem Weg umfaßt, die unter angemessenem Schutzgas zwischen 110 und 450 °C durchgeführt wird.

11. Verfahren nach einem der Ansprüche 5 bis 10, **dadurch gekennzeichnet, daß** die Verdichtung durch Sintern unter Vakuum oder unter niedrigem Partialdruck eines angemessenen Schutzgases, zwischen 1100 und 1500 °C durchgeführt wird.

12. Verfahren nach einem der Ansprüche 5 bis 11, **dadurch gekennzeichnet, daß** es ferner umfaßt:
- das Bearbeiten des entbinderten, verdichteten Rohlings.

13. Verfahren nach einem der Ansprüche 5 bis 12, **dadurch gekennzeichnet, daß** es ferner umfaßt:
- wenigstens eine zusätzliche Wärmebehandlung, die dazu bestimmt ist, den entbinderten, verdichteten, eventuell bearbeiteten Rohling zu härten.
